(19) Europäisches Patentamt / European Patent Office / Office européen des brevets

(11) **EP 2 174 809 B1**

(12) **EUROPÄISCHE PATENTSCHRIFT**

(45) Veröffentlichungstag und Bekanntmachung des Hinweises auf die Patenterteilung:
**14.12.2011 Patentblatt 2011/50**

(51) Int Cl.:
***B60H 1/00*** (2006.01)

(21) Anmeldenummer: **09172589.5**

(22) Anmeldetag: **08.10.2009**

(54) **Fahrzeugklimaanlage**

Vehicle air conditioner

Climatisation de véhicule

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **08.10.2008 DE 102008050447**

(43) Veröffentlichungstag der Anmeldung:
**14.04.2010 Patentblatt 2010/15**

(73) Patentinhaber: **Behr GmbH & Co. KG**
**70469 Stuttgart (DE)**

(72) Erfinder:
- **Otzelberger, Norbert**
  **70376, Stuttgart (DE)**
- **Schrumpf, Michael**
  **70186, Stuttgart (DE)**
- **Pfander, Andreas**
  **71384, Weinstadt (DE)**
- **Wipfler, Klaus**
  **75223, Niefern-Öschelbronn (DE)**

(56) Entgegenhaltungen:
**EP-A- 0 397 997     DE-A1- 10 025 334**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 174 809 B1

**Beschreibung**

Die Erfindung betrifft eine Fahrzeug-Klimaanlage gemäß dem Oberbegriff des Anspruches 1.

Bei Fahrzeug-Klimaanlagen sind häufig Klappen zwischen dem Verdampfer und dem nachfolgend angeordneten Heizer vorgesehen, welche im reinen Kühlbetrieb ein Einströmen von Luft in den Heizer verhindern. Hierbei kann auch auf der Rückseite des Heizers eine weitere Klappe angeordnet sein, welche im reinen Kühlbetrieb ein Rückströmen von Luft aus dem Mischraum in Richtung Heizer verhindert.

Eine derartige Anordnung ist beispielsweise aus der DE 100 25 334 A1 bekannt. Hierbei ist der Heizer im reinen Kühlbetrieb vollständige eingeschlossen, da sowohl die anströmseitige Klappe zur Umlenkung des Luftstroms in Richtung Kaltluftbypass als auch die abströmseitige Klappe zur Verhinderung eines Rückströmenes von Luft aus dem Mischraum vollständig geschlossen sind. Die anströmseitige Klappe wird durch eine Schmetterlingsklappe gebildet, während die abströmseitige Klappe durch eine Trommelklappe gebildet wird. Die Trommelklappe verschließt je nach Stellung den Warmluftpfad hinter dem Heizer oder den Kaltluftbypass. Weitere im Bereich des Mischraums angeordnete Klappen regeln die Verteilung der Luft auf Luftkanäle zu den einzelnen Ausströmern.

Weitere Beispiele bekannter Klappenanordnung mit Klappen vor und hinter dem Heizer sind in der DE 60 2004 002 821 T2, der EP 1 857 307 A1, der DE 196 32 147 A1 oder der DE 41 34 485 A1 offenbart.

Die EP 0 397 997 A1 offenbart eine Klappenanordnung gemäß Oberbegriff des Anspruchs 1. Klimaanlagen mit derartigen Klappenanordnungen lassen jedoch noch Wünsche, insbesondere auch in akustischer Hinsicht, offen.

Es ist Aufgabe der Erfindung, eine verbesserte Klimaanlage zur Verfügung zu stellen.

Diese Aufgabe wird gelöst durch eine Klimaanlage mit den Merkmalen des Anspruches 1. Vorteilhafte Ausgestaltungen sind Gegenstand der Unteransprüche.

Erfindungsgemäß ist eine Klimaanlage, insbesondere eine Fahrzeug-Klimaanlage, vorgesehen, mit einem Verdampfer und mindestens einem Heizer, welcher in einem Warmluftpfad liegt, sowie einen den Heizer umgehenden Kaltluftbypass, welcher in einem Kaltluftpfad liegt, aufweisend eine erste Klappe, welche zwischen dem Verdampfer und dem Heizer angeordnet ist, und mindestens eine zweite Klappe, welche hinter dem Heizer angeordnet ist, wobei die zweite Klappe ein Rückströmen von temperierter Luft in den Heizer verhindert, und die Klimaanlage in allen Betriebsstellungen der Klappen eine Minimalöffnung luftanströmseitig des Heizers vorsieht, während die zweite Klappe den Warmluftpfad im Kühlbetrieb vollständig verschließt. Erfindungsgemäß wird dies dadurch erreicht, dass die erste Klappe in allen Betriebsstellungen die genannte Minimalöffnung offen lässt.

Die zweite Klappe verhindert insbesondere im maximalen Kühlbetrieb, also in der Stellung, in der sie den Austritt, der aus dem Heizer kommenden Luft verschließt, eine Restaufwärmung der Luft im Mischraum, indem sie den Heizer entsprechend vom Mischraum abschottet, so dass an dieser Stelle eine konvektive Aufheizung unterbunden wird.

Die zweite Klappe ist bevorzugt eine Temperatur-Mischklappe zur Einstellung der Temperatur in einem Mischraum, wobei sie die Luftverteilung auf den Kaltluftpfad durch den Kaltluftbypass und den Warmluftpfad durch den Heizer regelt.

Vorzugsweise ist eine dritte Klappe vorgesehen, welche im Kaltluftpfad, bevorzugt in einem sogenannten Schichtungskanal, angeordnet ist und den Luftstrom durch den Kaltluftpfad in Verbindung mit der zweiten Klappe regelt. Diese dritte Klappe kann auch als Zuschichtungsklappe bezeichnet werden, da sie die direkte Zuführung von kalter Luft zu den Mittel- und Seitendüsen unterstützt, wodurch im Fahrzeuginnenraum eine Schichtung der Temperatur erzeugt wird, welche den Komfort erhöht. Ferner ermöglicht das Vorsehen einer weiteren Klappe im Kaltluftpfad einen sehr großen Querschnitt des Kaltluftpfades.

Die dritte Klappe öffnet bevorzugt aus der geschlossenen Stellung erst ab einer vorgegebenen Öffnung des Kaltluftpfades im Bereich der zweiten Klappe, so dass erst ab einer bestimmten Solltemperatur eine Temperaturschichtung erfolgt, so dass ein insbesondere auf ein schnelles Heizen des Fahrzeuginnenraums ausgelegter Betrieb nicht beeinträchtigt wird.

Bei der ersten Klappe handelt es sich erfindungsgemäß um eine asymmetrische Schmetterlingsklappe. Die Schwenkachse dieser Klappe ist - in der Höhe gesehen - im mittleren Bereich des Warmluftpfades angeordnet, wobei der längere Klappenflügel in maximal geschlossener Stellung der Klappe in Richtung Kaltluftpfad weist. Somit ergibt sich in der maximal geschlossenen Stellung der Klappe zwischen dem Ende des kürzeren Klappenflügels und der gegenüberliegenden Wand des Gehäuses ein Spalt.

Bei der zweiten Klappe handelt es sich bevorzugt um eine Trommelklappe. Die Schwenkachse der zweiten Klappe ist bevorzugt durch den Mischraum verlaufend angeordnet, und die Außenfläche der Klappe bildet die Sperrfläche für die durch den Warmluftpfad und Kaltluftpfad in Richtung Mischraum strömende Luft.

Bei der Klimaanlage ist, um eine akustische Verbesserung zu erzielen, der Zusammenhang zwischen dem minimalen Spaltmaß s und der Abstand von erster Klappe in geschlossener Stellung zur gegenüberliegenden Kammerwand D folgendermaßen definiert: $0{,}005 \leq s/D < 1$. Besonders bevorzugt ist der Bereich zwischen 0,01 und 0,1.

Im Folgenden wird die Erfindung anhand eines Ausführungsbeispiels unter Bezugnahme auf die Zeichnung im Einzelnen erläutert. Es zeigen:

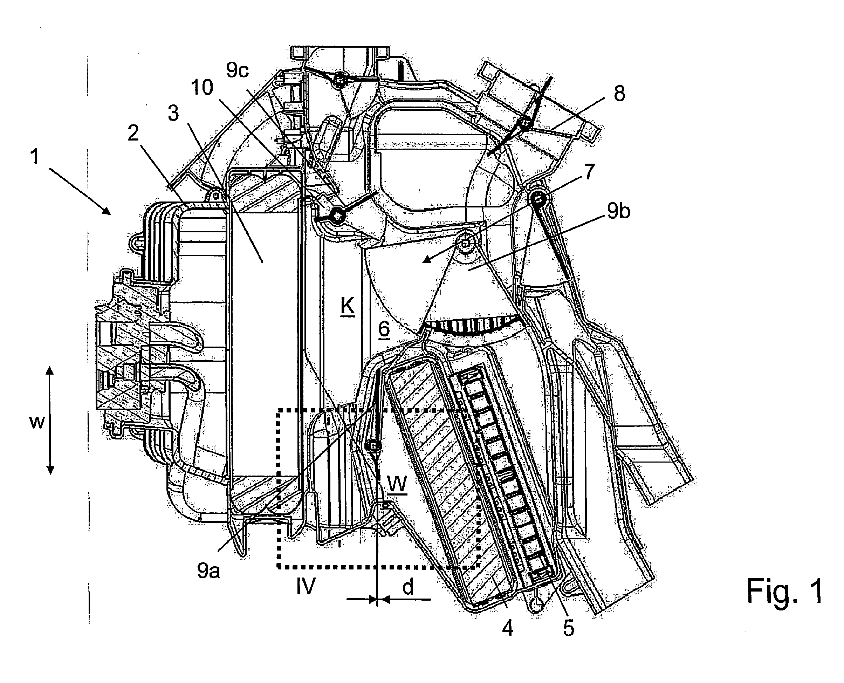

Fig. 1 einen Längsschnitt durch eine Kraftfahrzeug-Klimaanlage mit einer Klappenanordnung gemäß dem Ausführungs- beispiel in der Stellung "maximaler Kühlbetrieb",

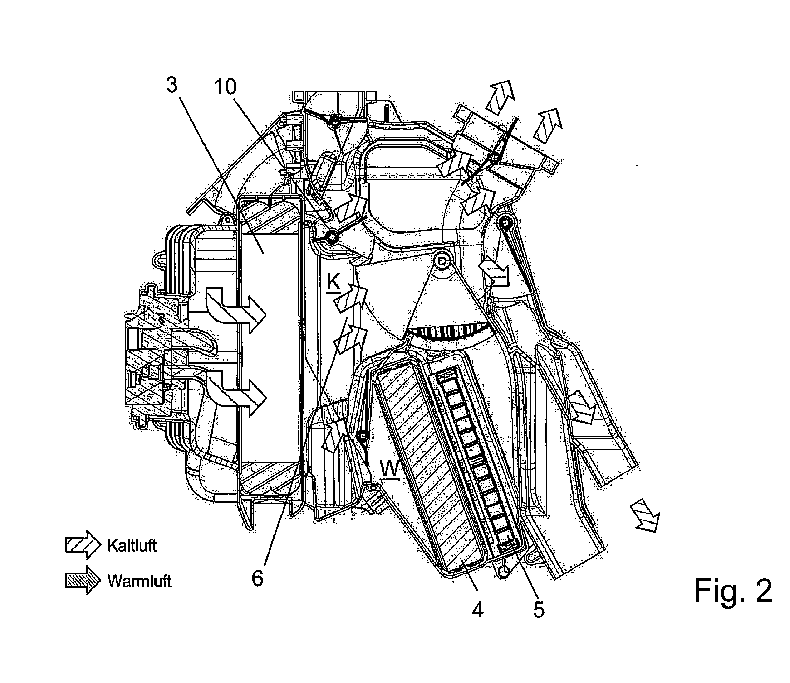

Fig. 2 eine Fig. 1 entsprechende Darstellung mit die Luftvertei- lung andeutenden Pfeilen,

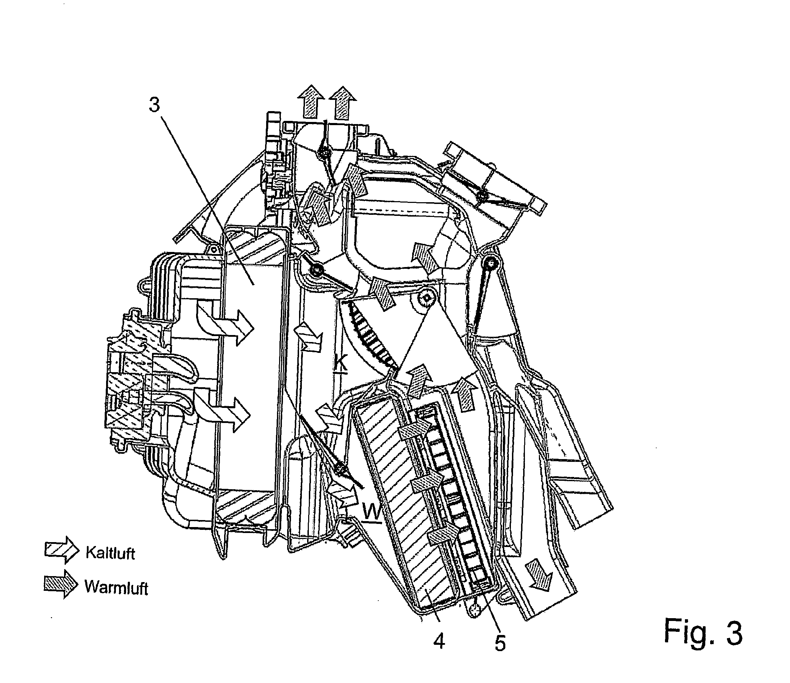

Fig. 3 die Klimaanlage von Fig. 1 in einem reinen Heizbetrieb mit die Luftverteilung andeutenden Pfeilen,

Fig. 4 eine vergrößerte Darstellung des Bereichs IV von Fig. 1, und

Fig. 5 eine Darstellung eines Teils der Klimaanlage von Fig. 1 zur Verdeutlichung des akustisch wirksamen Bereichs.

Eine Kraftfahrzeug-Klimaanlage 1 zur Regelung der Temperatur eines dem Fahrzeuginnenraum zuzuführenden Luftstroms weist in einem Gehäuse 2 angeordnet ein Gebläse (nicht näher dargestellt), einen Verdampfer 3, einen Heizer 4 mit PTC-Zuheizer 5, einen Kaltluftpfad K mit einem Schichtungskanal 10 und einem Kaltluftbypass 6, einen Mischraum 7 sowie eine Mehrzahl von, die Luftverteilung auf Luftkanäle zum Fahrzeuginnenraum regelnden Klappen 8 auf. Ferner sind vorliegend drei Klappen 9 zur Regelung der Luftverteilung auf den Heizer und/oder Zuheizer, den Schichtungskanal 10 und den Kaltluftbypass 6 vorgesehen, wobei eine erste Klappe 9a vor dem Heizer 4 und eine zweite Klappe 9b in einem Bereich des Mischraums 7 angeordnet ist. Eine dritte Klappe 9c ist am oberen Ende des Kaltluftbypasses 6 im Schichtungskanal 10 angeordnet und wirkt mit der zweiten Klappe 9b zusammen.

Die erste Klappe 9a ist als asymmetrische Schmetterlingsklappe ausgebildet, deren Schwenkachse etwa in der Mitte (in Bezug auf die Höhe) des Eintritts zum Heizer 4 angeordnet ist. Dabei zeigt der längere Klappenflügel nach oben und liegt im maximal geschlossenen Zustand der ersten Klappe 9a benachbart der luftanströmseitigen oberen Kante des Heizers 4 an einer Trennwand des Gehäuses an.

Die zweite Klappe 9b als Trommelklappe ausgebildet, deren Schwenkachse im Mischraum 7 verläuft. Die zweite Klappe lässt sich um ca. 60° verschwenken, wobei sie in der einen Endstellung (Kühlbetrieb) den Austritt vom Heizer 4 und Zuheizer 5 vollständig verschließt, und in der anderen Endstellung (Heizbetrieb) den Kaltluftpfad K in seinem unteren und mittleren Bereich bzw. den Kaltluftbypass 6 verschließt.

Die dritte Klappe 9c ist wiederum als asymmetrische Schmetterlingsklappe ausgebildet, wobei ihre Schwenkachse luftabströmseitig etwa in Höhe des oberen Verdampferendes angeordnet ist. Der kürzere Klappenflügel kann mit seinem Ende in Anlage an die obere Wand des Kaltluftpfades K gelangen, wenn derselbe im Heizbetrieb verschlossen werden soll, und das Ende des anderen, längeren Klappenflügels kann in Anlage an die zweite Klappe 9c gelangen, wenn diese in ihrer Endstellung für den Heizbetrieb ist.

Somit sind ein Kaltluftpfad K, ausgehend vom Verdampfer 3 durch den Kaltluftbypass 6 in dem Mischraum 7 und den Schichtungskanal 10, sowie ein Warmluftpfad W, ausgehend vom Verdampfer 3 durch den Heizer 4, den Zuheizer 5 in den Mischraum 7, vorgesehen, welche durch das Zusammenwirken der drei Klappen 9 geregelt werden. Die durch den Kaltluftpfad K, insbesondere durch den Kaltluftbypass 6 und den Warmluftpfad W strömenden Luftströme werden im Mischraum 7 vermischt. Vom Mischraum 7 gehen Luftkanäle zur Windschutzscheibe (Defrostluftkanal), zur Mittel-/Seitendüse, zum Fußraum und zur Fondbelüftung ab.

Die erste Klappe 9a regelt in Verbindung mit der zweiten Klappe 9b den Luftstrom durch den Heizer 4 und Zuheizer 5, wobei vorliegend die erste Klappe 9a den Warmluftpfad W im Kühlbetrieb auch in maximal geschlossener Stellung nicht vollständig absperrt, worauf an späterer Stelle näher eingegangen wird.

Die zweite Klappe 9b verhindert im reinen Kühlbetrieb ein Rückströmen von kalter Luft aus dem Mischraum 7 in Richtung Heizer 4/Zuheizer 5, was zu einer Erwärmung derselben führen würde. Zudem verhindert die zweite Klappe 9b ein Durchströmen von Luft durch den Heizer 4 und Zuheizer 5, da die erste Klappe 9a den Warmluftpfad W, wie zuvor erwähnt, in der maximal geschlossenen Stellung nicht vollständig absperrt. Ferner regelt die zweite Klappe 9b in Zusammenwirken mit der dritten Klappe 9c den Luftstrom durch den Kaltluftbypass 6, den Schichtungskanal 10 und den Heizer 4/Zuheizer 5, d.h. die Luftverteilung auf den Kaltluftpfad K und Warmluftpfad W, wobei die dritte Klappe 9c mit der zweiten Klappe 9b zusammenwirkt. Die dritte Klappe 9c unterstützt hierbei die Förderung kalter Luft direkt zum Luftkanal, welcher zur Mitteldüse führt. Die zweite und dritte Klappe sind in ihren Bewegungsabläufen derart miteinander gekoppelt, dass - ausgehend vom Heizbetrieb - die dritte Klappe erst ab einer gewissen Winkelstellung der zweiten Klappe zu öffnen beginnt. Das Koppeln der beiden Klappen 9b, 9c kann mechanisch, z.B. über Kurvenscheiben, oder elektronisch, bspw. über entsprechend gesteuerte Aktuatoren, erfolgen.

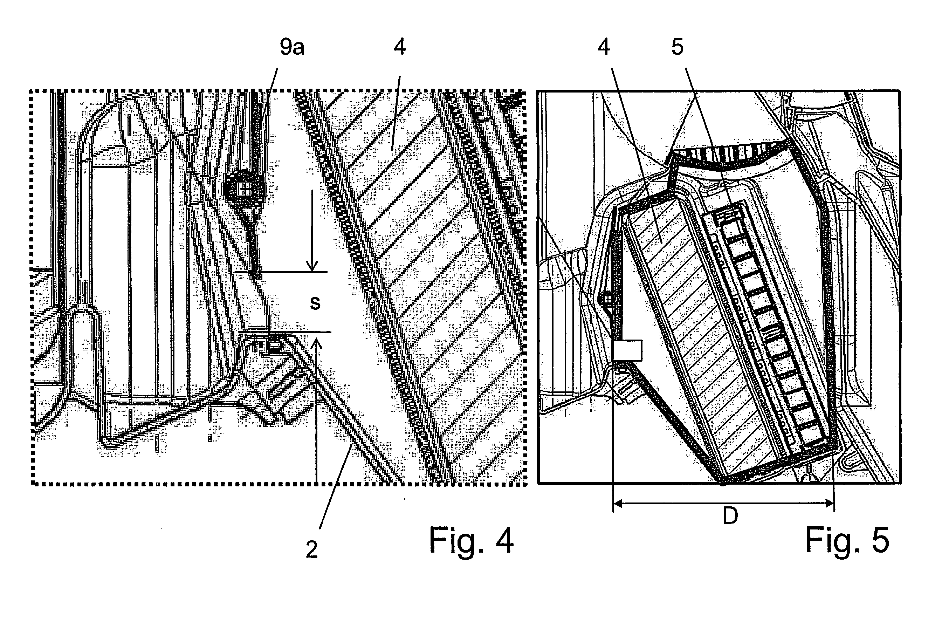

Die erste Klappe 9a weist, wie aus der Zeichnung ersichtlich, einen langen Flügel, der in der maximal geschlossenen Stellung, d.h. bei einem reinen Kühlbetrieb der Klimaanlage 1, an einer Anlagefläche benachbart der oberen anströmseitige Kante des Heizers 4 anliegt, und einen kurzen Flügel auf, der in der maximal geschlossenen Stellung einen minimalen Spalt mit dem Spaltmaß s (siehe Fig. 4) zur gegenüberliegenden Wandfläche bildet. Die erste Klappe 9a weist ferner eine Klappendicke d sowie eine Klappenhöhe w auf. Wie in Fig. 5 vereinfacht dargestellt, bildet der Teil des Warmluftpfades W, welcher durch die erste Klappe 9a und die zweite Klappe 9b begrenzt ist, eine Art Kammer im reinen Kühlbetrieb, welche lediglich luftanströmseitig eine durch den Spalt gebildete Öffnung aufweist. Diese Kammer ist in Fig. 5 dick umrahmt dargestellt. Der Abstand von erster Klappe 9a zur gegenüberliegenden Kammerwand ist in Fig. 4 mit D bezeichnet. Für eine geeignete akustische Wirkung der Klappenanordnung sollte folgender Zusammenhang zwischen D und s gegeben sein:

$$0{,}005 \leq s/D < 1$$

Vorliegend beträgt s/D etwa 0,1. Ferner beträgt das Verhältnis s/w etwa 0,15. Zur Dämpfung tragen auch Heizer 4 und Zuheizer 5 bei, welche als zusätzliche Schallabsorber dienen.

Zudem gilt, dass große Kammern, d.h. insbesondere große Werte für D, zu tiefen Dämpfungsfrequenzen führen, wobei über eine relativ große Bandbreite gedämpft wird. Zusätzlichen Einfluss auf die Dämpfungseigenschaften der Kammer haben auch der Heizer 4 sowie der Zuheizer 5.

Die Dämpfungsfrequenz der Kammer lässt sich durch folgenden Zusammenhang abschätzen:

$$f_0 = 55 \times \sqrt{s/(d \times 1{,}2 \times D \times (s + w))}$$

Wie aus dem Zusammenhang ersichtlich, lässt sich das System relativ einfach über die Größe des Spaltmaßes s abstimmen.

**Bezugszeichenliste**

1 Klimaanlage
2 Gehäuse
3 Verdampfer
4 Heizer
5 Zuheizer
6 Kaltluftbypass
7 Mischraum
8 Klappe
9 Klappe
9a erste Klappe
9b zweite Klappe
9c dritte Klappe
10 Schichtungskanal

**Patentansprüche**

1. Fahrzeug-Klimaanlage (1) mit einem Verdampfer (3) und mindestens einem Heizer (4, 5), welcher in einem Warmluftpfad (W) liegt, sowie einen den Heizer (4, 5) umgehenden Kaltluftbypass (6), welcher in einem Kaltluftpfad (K) liegt, aufweisend eine erste Klappe (9a), welche zwischen dem Verdampfer (3) und dem Heizer (4, 5) angeordnet ist, und mindestens eine zweite Klappe (9b), welche hinter dem Heizer (4, 5) angeordnet ist, wobei die zweite Klappe (9b) ein Rückströmen von temperierter Luft in den Heizer (4, 5) verhindert, wobei die Klimaanlage (1) in allen Betriebsstellungen der Klappen (9a, 9b) eine Minimalöffnung luftanströmseitig des Heizers (4, 5) vor sieht, während die zweite Klappe (9b) den Warmluftpfad (W) im Kühlbetrieb vollständig verschließt, **dadurch gekennzeichnet, dass** die erste Klappe (9a) eine asymmetrische Schmetterlingsklappe ist und

die erste Klappe (9a) eine Schwenkachse aufweist, welche im - in der Höhe gesehen - mittleren Bereich des Warmluftpfades (W) angeordnet ist, wobei der längere Klappenflügel in maximal geschlossener Stellung der Klappe in Richtung Kaltluftpfad (K) weist.

2. Klimaanlage nach Anspruch 1, **dadurch gekennzeichnet, dass** die zweite Klappe (9b) eine Temperatur-Mischklappe ist, welche die Luftverteilung auf den Kaltluftpfad durch den Kaltluftbypass (6) und den Warmluftpfad durch den Heizer (4, 5) regelt.

3. Klimaanlage nach Anspruch 1 oder 2, **gekennzeichnet durch** eine dritte Klappe (9c), welche im Kaltluftpfad (K) in einem Schichtungskanal (10) angeordnet ist und den Luftstrom **durch** den Kaltluftpfad (K) in Verbindung mit der zweiten Klappe (9b) regelt.

4. Klimaanlage nach Anspruch 3, **dadurch gekennzeichnet, dass** die dritte Klappe (9c) aus der geschlossenen Stellung erst ab einer vorgegebenen Öffnung des Kaltluftpfades (K) im Bereich der zweiten Klappe (9b) öffnet.

5. Klimaanlage nach einem der vorhergehenden Ansprüche, **dadurch gekennzeichnet, dass** die zweite Klappe (9b) eine Trommelklappe ist.

6. Klimaanlage nach Anspruch 5, **dadurch gekennzeichnet, dass** die Schwenkachse der zweiten Klappe (9b) durch den Mischraum (7) verlaufend angeordnet ist, und die Außenfläche der Klappe die Sperrfläche für die durch den Warmluftpfad (W) und Kaltluftpfad (K) in Richtung Mischraum (7) strömende Luft ist.

7. Klimaanlage nach einem der vorhergehenden Ansprüche, **dadurch gekennzeichnet, dass** der Zusammenhang zwischen dem minimalen Spaltmaß s und der Abstand von erster Klappe (9a) in geschlossener Stellung zur gegenüberliegenden Kammerwand D folgendermaßen definiert ist: $0{,}005 \leq s/D < 1$.

8. Klimaanlage nach einem der vorhergehenden Ansprüche, **dadurch gekennzeichnet, dass** die Dämpfungsfrequenz der Kammer, welche durch den durch die erste und zweite Klappe begrenzten Warmluftpfad gebildet ist, näherungsweise durch folgenden Zusammenhang gegeben ist:

$$f_0 \doteq 55 \times \sqrt{s/(d \times 1{,}2 \times D \times (s+w))}$$

wobei s = Spaltmaß, d = Klappendicke, D = Abstand von erster Klappe (9a) in geschlossener Stellung zur gegenüberliegenden Kammerwand, w = Klappenhöhe.

**Claims**

1. A vehicle air conditioning system (1) comprising an evaporator (3) and at least one heater (4, 5), which lies in a warm air path (W), and a could air bypass (6), which circumvents the heater (4, 5) and lies in a cold air path (K), having a first valve (9a), disposed between the evaporator (3) and the heater (4, 5), and at least one second value (9b), disposed downstream of the heater (4, 5), therein the second valve (9b) prevents temperature-controlled air from flowing back into the heater (4, 5), therein in all the operating conditions of the valves (9a, 9b), the air conditioning system (1) provides for a minimal opening on the air-distribution side of the heater (4, 5), while the second valve (9b) completely closes the warm air path (W) in cooling operation, **characterized in that** the first valve (9a) is an asymmetrical butterfly valve and the first valve (9a) has a swivel axis, which is disposed in the central legion of the warm air path (W), viewed vertically, therein, in the maximally closed position of the salve, the longer value wring points in the direction of the could air path (K).

2. The air conditioning system according to claim 1, **characterized in that** the second valve (9b) is a temperature mixing value, which regulates the distribution of air in the cold air path by means of the cold air bypass (6) and in the warm air path by means of the heater (4, 5).

3. The pair conditioning system according to claim 1 or 2, **characterized by** a third valve (9c), which is disposed in the cold air path (K) in a laminated channel (10), and regulates the flow of air through the cold air path (K) in conjunction with the second valve (9b).

4. The air conditioning system according to claim 3, **characterized in that** the third valve (9c) opens from the closed position only after a redefined opening of the cold air path (K) in the region of the second valve (9b).

5. The air conditioning system according to any one of the preceding claims, **characterized in that** the second valve (9b) is a drum valve.

6. The air conditioning system according to claim 5, **characterized in that** the swivel axis of the second valve (9b) is disposed expending through the fixing chamber (7), and the exterior surface of the valve is the blocking surface for the air flowing through the warm air path (W) and cold air path (K) in the direction of the mixing chamber (7).

7. The air conditioning system according to any one of the preceding claims, **characterized in that** the correlation between the minimal gap measurement s and the distance between the first valve (9a) in the closed position and the apposite chamber wall D is defined as follows: 0.005 ≤ s / D<1.

8. The air conditioning system according to any one of the preceding claims, **characterized in that** the attenuation frequency of the chamber, which is formed by the warm air path delimited by the first and second valves, is determined approximately by the following correlation:

$$f_0 = 55 \times \sqrt{s/(d \times 1{,}2 \times D \times (s+w))}$$

in which s = gap measurement, d = valve thickness, D = distance from the first valve (9a), in the closed position, from the apposite chamber wall, w = valve height.

**Revendications**

1. Système de climatisation de véhicule (1) comprenant un évaporateur (3) et au moins un dispositif de chauffage (4, 5) qui se trouve dans un passage d'air chaud (W), ainsi qu'une dérivation d'air froid (6) contournant le dispositif de chauffage (4, 5), laquelle dérivation d'air froid se trouve dans un passage d'air froid (K), présentant un premier volet (9a) qui est disposé entre l'évaporateur (3) et le dispositif de chauffage (4, 5), et au moins un deuxième volet (9b) qui est disposé derrière le dispositif de chauffage (4, 5), où le deuxième volet (9b) empêche un flux de retour d'air tempéré dans le dispositif de chauffage (4, 5), où le Système de climatisation (1) prévoit, dans toutes les positions de fonctionnement des volets (9a, 9b), une ouverture minimale du dispositif de chauffage (4, 5) côté entrée d'air, taudis que le deuxième volet (9b) ferme complètement le passage d'air chaud (W) au cours du fonctionnement en mode refroidissement,
**caractérisé en ce que** le premier volet (9a) est an volet papillon symétrique et **en ce que** le premier volet (9a) présente un axe de pivotement qui, vu dans le sens de la hauteur, est disposé dans la zone centrale du passade d'air chaud (W), où la plus langue ailette du volet pointe en direction du passage d'air froid (K) lorsque le volet est en position fermée au maximum.

2. Système de climatisation selon la revendication 1, **caractérisé en ce que** le deuxième volet (9b) est un violet mélanger de température qui règle la répartition d'air fourni au passage d'air froid circulant à travers la dérivation d'air froid (6) et au passade d'air chaud circulant à travers le dispositif de chauffage (4, 5).

3. Système de climatisation selon la revendication 1 ou 2, **caractérisé par** un troisième volet (9c) qui est disposé, dans le passage d'air froid (K), dans un conduit de répartition en couches (10), et, en association avec le deuxième volet (9b), règle le flux d'air circulant à travers le passade d'air froid (K).

4. Système de climatisation selon la revendication 3, **caractérisé en ce que** le troisième volet (9c) s'ouvre en parlant de la position fermée, seulement à partir d'une ouverture prédéfinie du passage d'air froid (K) dans la zone du deuxième volet (9b).

5. Système de climatisation selon l'une quelconque des revendications précédentes, **caractérisé en ce que** le deuxième volet (9b) est un volet tambour.

6. Système de climatisation selon la revendication 5, **caractérisé en ce que** l'axe de pivotement du deuxième volet (9b) est disposé en s'étendant à travers l'espace de mélange (7), et **en ce que** la surface extérieure du volet est la surface d'obturation pour l'air circulant à travers le passage d'air chaud (W) et le passage d'air froid (K), en direction de l'espace de mélange (7).

7. Système de climatisation selon l'une quelconque des revendications précédentes, **caractérisé en ce que** la relation entre la dimension minimale d'écartement s et la distance D du premier volet (9a), en position fermée, par rapport à la paroi de chambre opposée, est définie comme suit : $0,005 \leq s/D < 1$.

8. Système de climatisation selon l'une quelconque des revendications précédentes, **caractérisé en ce que** la fréquente d'amortissement de la chambre qui est formée par le passage d'air chaud délimité par le premier et le deuxième volet est donnée approximativement par la relation suivante :

$$f_0 = 55 \times \sqrt{s/(d \times 1,2 \times D \times (s + w))}$$

où s = dimension d'écartement, d = épaisseur de volet, D = distance du premier volet (9a), en position fermée, par rapport à la paroi de chambre opposée, w = hauteur de volet.

EP 2 174 809 B1

Fig. 1

EP 2 174 809 B1

Kaltluft

Warmluft

Fig. 2

Fig. 3

Kaltluft

Warmluft

Fig. 5

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10025334 A1
- DE 602004002821 T2
- EP 1857307 A1
- DE 19632147 A1
- DE 4134485 A1
- EP 0397997 A1